# EUROPÄISCHE PATENTSCHRIFT

(11) **EP 1 827 752 B1**
(45) Veröffentlichungstag und Bekanntmachung des Hinweises auf die Patenterteilung: **11.04.2012**
(21) Anmeldenummer: 06753696.1
(22) Anmeldetag: 18.05.2006
(51) Int. Cl.: B23K 33/00, B23K 9/23

(54) **VERFAHREN ZUR HERSTELLUNG EINER SCHWEISSVERBINDUNG SOWIE VERFAHREN ZUR REPARATUR EINER SCHWEISSVERBINDUNG**
METHOD FOR PRODUCING A WELDED CONNECTION AND METHOD FOR REPAIRING A WELDED CONNECTION
PROCEDE POUR PRODUIRE UNE LIAISON DE SOUDURE, ET PROCEDE POUR REPARER UNE LIAISON DE SOUDURE

(30) Priorität: 29.07.2005 DE 102005035585
(43) Veröffentlichungstag der Anmeldung: 05.09.2007
(73) Patentinhaber: AREVA NP GmbH, 91052 Erlangen (DE)
(72) Erfinder: BRÜCKNER, Erhard, 91341 Röttenbach (DE); ENGELHARD, Gerhard, 91058 Erlangen (DE); GÜGEL, Siegfried, 91096 Möhrendorf (DE)
(74) Vertreter: Mörtel & Höfner
(86) Internationale Anmeldenummer: PCT/EP2006/004701
(87) Internationale Veröffentlichungsnummer: WO 2007/014585

(56) Entgegenhaltungen:
- AT-B- 189 029
- DE-A1- 19 953 079
- FR-A- 2 723 869
- FR-A- 2 799 401
- US-B1- 6 193 145
- SELAHADDIN ANIK ET AL: "METALLPHYSIKALISCHE VORGAENGE BEIM SCHWEISSEN UNTERSCHIEDLICHER WERKSTOFFE - WERKSTOFFLICHE GRUNDLAGEN UND VERBINDUNGEN ZWISCHEN VERSCHIEDENARTIGEN STAEHLEN" SCHWEISSEN UND SCHNEIDEN, DVS VERLAG, DUSSELDORF, DE, Bd. 44, Nr. 3, 1. März 1992 (1992-03-01), Seiten 148-152, XP000257351 ISSN: 0036-7184
- PATENT ABSTRACTS OF JAPAN Bd. 2000, Nr. 02, 29. Februar 2000 (2000-02-29) & JP 11 315973 A (ISHIKAWAJIMA HARIMA HEAVY IND CO LTD), 16. November 1999 (1999-11-16)
- PATENT ABSTRACTS OF JAPAN Bd. 013, Nr. 497 (M-889), 9. November 1989 (1989-11-09) & JP 01 197073 A (JAPAN STEEL WORKS LTD:THE), 8. August 1989 (1989-08-08)

## Beschreibung

Die Erfindung betrifft ein Verfahren zur Herstellung sowie ein Verfahren zur Reparatur einer Schweißverbindung zwischen einem ersten und einem zweiten, jeweils eine Innenseite, eine Außenseite und eine diese verbindende Stirnseite aufweisenden Bauteil gemäβ dem Oberbegriff des Anspruchs 1 (siche, z.B, US6193145) und des Anspruchs 9 (siche, z.B, FR2799401).

Die Erfindung betrifft weiterhin ein Verfahren zur Reparatur einer derartigen Schweißverbindung. Als Bauteile kommen insbesondere Rohre oder Rohrstutzen in Frage, deren Innenseite mit einem korrosiven Medium in Kontakt kommt. Insbesondere ist hier der Primärkreislauf eines Kernkraftwerkes zu nennen, in dem als Primärkühlmittel unter Druck stehendes und hohe Temperaturen aufweisendes Wasser zirkuliert. Zur Vermeidung von Korrosionserscheinungen des Reaktordruckbehälters, der aus Festigkeitsgründen aus einem ferritischen Werkstoff besteht, ist dieser innenseitig mit einer Plattierung aus einem austenitischem Werkstoff versehen. Eine an den Anschlussstutzen eines Reaktordruckbehälters angeschlossene Rohrleitung kann dagegen vollständig aus korrosionsfesterem austenitischem Werkstoff bestehen. Zwei Bauteile der Eingangs genannten Art bzw. ein ferritischer Rohrabschnitt mit austenitischer Innenplattierung und ein vollständig austenitischer Rohrabschnitt werden bei einer üblichen Vorgehensweise mit einer Schweißnaht aus einer Nickel-Basis-Legierung miteinander verbunden. Nach-teil dabei ist, dass bestimmte Nickel-Basis-Legierüngen eine geringere Korrosionsbeständigkeit (interkristalline Spannungsrisskorrosion) aufweisen als austenitische Materialien, so dass bei längerem Kontakt mit einem korrosiven Medium, etwa mit Wasser während des Betriebs eines Kernreaktors, die Gefahr besteht, dass die Schweißnaht von innen her korrodiert.

US 6,193,145 B1 offenbart ein Verfahren zur Verbindung zweier Rohre, wobei ein erstes Rohr aus einem ferritischen Material mit einer innenseitigen Beschichtung aus rostfreiem Stahl besteht. Das zweite Rohr ist vollständig aus einem austenitischem Stahl gefertig. Das zweite Rohr weist ein sich innenseitig in das erste Rohr hinein erstreckendes, formschlüssig mit der Beschichtung aus rostfreiem Stahl abschließendes Hackenstück auf, so dass auf der Innenseite der beiden Rohre eine durchgehende Schicht aus rostfreiem Material vorliegt.

Eine alternative Möglichkeit zur Herstellung einer Verbindung zwischen zwei Rohren besteht gemäß der FR 2799401 A darin, eine sich in axialer Richtung erstreckende Schweißnaht aus einer Nickel-Basis-Legierung auf der Innenseite im Verbindungsbereich der beiden Rohre anzubringen. Die beiden Rohre werden dabei stumpf aneinandergesetzt. Außerdem wird zur Verbindung der Rohrstücke ein Zwischenstück verwendet. Das Zwischenstück weist entsprechend der Materialien der zu verbindenden Rohre ein erstes Teilstück aus ferritischem Stahl und ein zweites Teilstück aus austenitischem Stahl auf, welche jeweils passend mit den entsprechenden Rohrstücken verbundene werden.

Aufgabe der Erfindung ist es, ein Verfahren zur Herstellung einer korrosionsbeständigeren Schweißverbindung und ein Verfahren zur Reparatur einer korrosionsgeschädigten Schweißverbindung vorzuschlagen. Hinsichtlich des Verfahrens zur Herstellung einer Schweißverbindung wird diese Aufgabe nach Anspruch 1 und hinsichtlich des Reparaturverfahrens nach Anspruch 9 gelöst.

Nähere Einzelheiten der Erfindung sowie Vorteile gehen aus der folgenden Beschreibung hervor, welche auf die beigefügten Zeichnungen Bezug nimmt. Es zeigen:
Fig. 1 einen Reaktordruckbehälter mit einem Anschlussstutzen und einem damit verbundenen Rohr,
fig. 2 eine herkömmliche Schweißverbindung zwischen Anschlussstutzen und Rohr,
Fig. 3.1 - Fig. 3.6 schematische Schnittdarstellungen, welche die Abfolge einer ersten Verfahrensvariante zur Herstellung einer Schweißverbindung verdeutlichen,
Fig. 4.1 - Fig: 4.5 schematische Schnittdarstellungen, die die einzelnen Verfahrensschritte einer zweiten Verfahrensvariante darstellen,
Fig. 5.1 - Fig. 5.6 schematische Schnittdarstellungen, die den Verfahrensablauf einer dritten Verfahrensvariante wiedergeben,
Fig. 6.1 - Fig. 6.4. schematische Schnittdarstellungen, die den Ablauf eines Verfahrens zur Reparatur einer herkömmlichen Schweißverbindung wiedergeben.

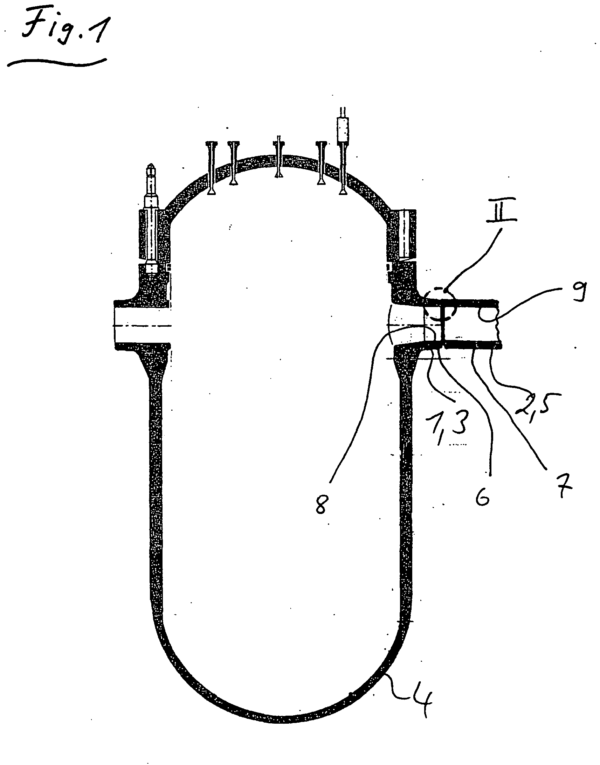

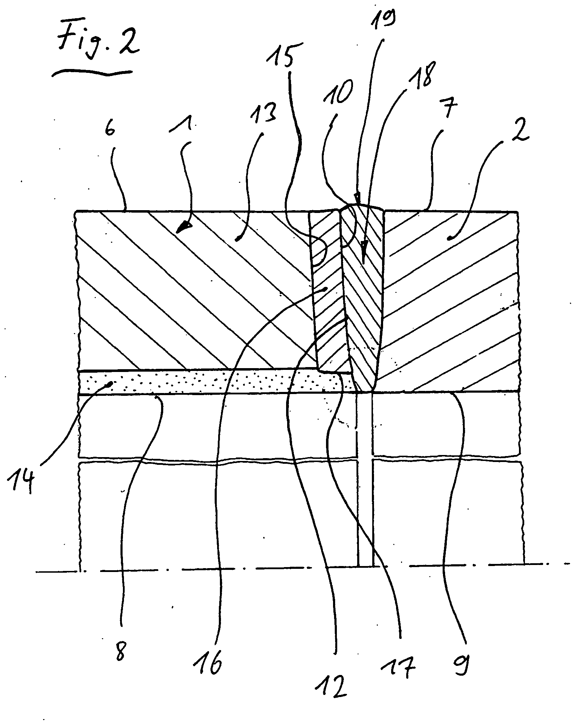

Fig. 2 zeigt eine herkömmliche Schweißverbindung zwischen einem ersten Bauteil 1 und einem zweiten Bauteil 2, wobei das erste Bauteil 1 insbesondere ein Rohrabschnitt, etwa der Anschlussstutzen 3 eines Reaktordruckbehälters 4 und das Bauteil 2 ein daran Stoß an Stoß angesetztes Rohr 5 (Fig. 1) ist. Die Bauteile 1, 2 weisen jeweils eine Außenseite 6, 7, eine Innenseite 8, 9 und eine Außen- und Innenseite miteinander verbindende Stirnseite 10 bzw. 12 auf. Das erste Bauteil 1 setzt sich aus einem Grundkörper 13 und einer innenseitig an diesen angebrachten Plattierung 14 zusammen. Der Grundkörper 13 besteht aus einem ferritischem Werkstoff, beispielsweise aus 22 NiMoCr 37 (Werkstoff Nr. 1.6751) bzw. SA 508 Cl 2 (ASME Code). Die Plattierung 14 besteht gemäß der Erfindung aus einem austenitischen Material, beispielsweise Werkstoff Nr. 1.4551 bzw. AISI 347. Die Stirnseite 15 des Grundkörpers 13 trägt eine Pufferschicht 16 aus einer Nickel-Basis-Legierung, beispielsweise Inconel 182 mit einem Nickelgehalt größer 67%, wobei als Legierungsbestandteile u.a. 16% Chrom, 6,5% Mangan und 6% Eisen enthalten sind (Prozentangaben hier und an sonstiger Stelle sind Gewichtsprozent). Die Pufferschicht 16 überdeckt die gesamte Stirnseite 15 des Grundkörpers 13. Ihre nach innen weisende Schmalseite 17 ist mit der Plattierung 14 stoffschlüssig verbunden. Das zweite Bauteil besteht aus einem austenitischen Material, z.B. aus X 10 CrNiMoTi 1810 (1.4571) bzw. AISI 316 L. Die beiden Bauteile 1, 2 sind mit Axialabstand fluchtend zueinander ausgerichtet, wobei sie eine Schweißfuge 18 bzw. eine Schweißnaht 19 zwischen sich einschließen. Die Schweißnaht 19 wird mit einer Nickel-Basis-Legierung als Schweißzusatzstoff, beispielsweise I 82, erzeugt. Sie erstreckt sich bis zur Innenseite 8, 9 des ersten bzw. zweiten Bauteils 1, 2 und ist dort den korrosiven Einflüssen des damit in Verbindung stehenden Mediums, insbesondere eines unter hohem Druck stehenden und hohe Temperaturen von mehr als 280°C aufweisenden Primärkühlmittels ausgesetzt. Nickel-Basis-Legierungen haben eine vergleichsweise geringe Korrosionsresistenz, so dass es im Bereich der Schweißnaht 19 von der Innenseite her zu Korrosion kommen kann. Ziel der Erfindung ist es nun, wie eingangs schon erwähnt, hier Abhilfe zu schaffen.

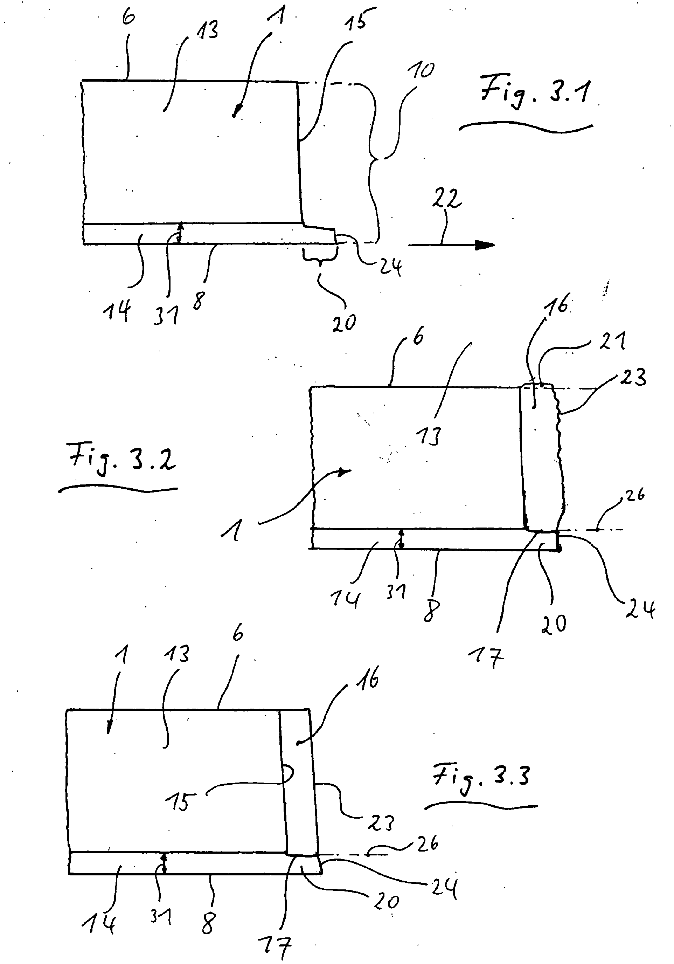

In Fig. 3.1 bis Fig. 3.6 ist eine erste Verfahrensvariante schematisch aufgezeigt. In einem ersten Teil des Verfahrens (Fig. 3.1 bis Fig. 3.3) wird zunächst das Bauteil 1 mit einer Pufferschicht 16 aus Inconel 182 versehen. Dazu wird zunächst der Grundkörper 13 stirnseitig soweit abgetragen, dass seine Stirnseite 15 gegenüber der Plattierung 14 zurückversetzt ist bzw. dass die Plattierung 14 mit einem Überstand 20 die Stirnseite 15 in Axialrichtung 22 überragt. Dabei wird auch ein Teil der Plattierung 14 mit abgetragen, so dass der Überstand 20 eine Dicke aufweist, die geringfügig kleiner ist als die Dicke 31 der ursprünglichen Plattierung. Als nächster Schritt (Fig. 3.2) wird auf die Stirnseite 15 die Pufferschicht 16 in Form von mehrlagigen Schweißraupen (nicht dargestellt), beginnend am Überstand 20, aufgebracht. Die so entstandene Pufferschicht hat eine ungleichmäßige Stirnseite 23, und steht oberseits über die Außenseite 6 des Bauteils 1 mit einem Materialüberschuss 21 hinaus. In einem nächsten Verfahrensschritt wird die Pufferschicht 16 spanend bearbeitet und dadurch ihre Stirnseite 23 geglättet und von der Außenseite her soweit abgetragen, dass sie mit der Außenseite 6 des Bauteils 1 fluchtet (Fig. 3.3). An ein derart vorbereitetes Bauteil 1 wird nun das Bauteil 2 unter Freilassung einer Schweißfuge 18 stirnseitig angesetzt und zwischen der Stirnseite 12 des Bauteils 2 und der Stirnseite 24 der Plattierung 14 eine Wurzel 25 aus austenitischem Material, beispielsweise Werkstoff Nr. 1.4551 bzw. ER 347Si angeschweißt. Die von der Wurzel 25 gebildete Verbindungsstelle zwischen beiden Bauteile 1 und 2 besteht aus dem gleichen Werkstoff wie die Plattierung 14 und das Bauteil 2 oder einem damit vergleichbaren Werkstoff, so dass sie sich in korrosiver Hinsicht gleich oder ähnlich verhält wie die Plattierung 16 und das Bauteil 2. Da ein Verschweißen eines austenitischen Materials auf Inconel zu Rissen neigt, kann sich die Wurzel 25 nur bis zur Trennlinie 26 zwischen der Plattierung 14 und der Pufferschicht 16 erstrecken.

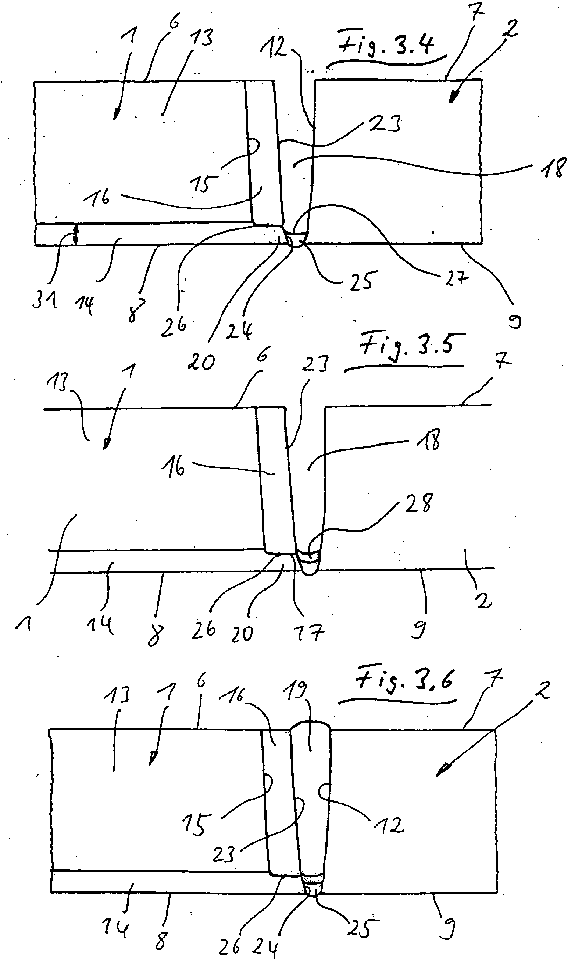

Als nächster Verfahrensschritt wird auf die Außenseite der Wurzel 25 eine Zwischenschicht 28 aus einer Nickel-Legierung mit 96% Nickel, 3% Titan und üblichen Begleitelementen, wie Eisen, Silizium und Mangan als Rest aufgeschweißt (Fig. 3.5).

Als letzter Arbeitsgang (Fig. 3.6) wird nun auf die Außenseite der Zwischenschicht 28 eine Schweißnaht 19 aufgebracht, wobei als Schweißzusatzstoff Inconel 82 verwendet wird. Bei diesem wie auch allen anderen hier erwähnten Schweißvorgängen wird unter Schutzgas geschweißt. Dieses Verfahren ist weitgehend automatisiert. Dabei wird der aus dem Schweißzusatzstoff, also z.B. aus Inconel 82 bestehende Schweißdraht nicht per Hand, sondern über eine entsprechende Einrichtung automatisch der Schweißstelle zugeführt. Dabei ist entscheidend, dass die Zuführung mit einer stets gleichbleibenden Geschwindigkeit derart erfolgt, dass im Bereich des Schweißlichtbogens und dem dort entstehenden Schmelzbad stets ausreichend Schmelzzusatzstoff vorhanden ist. Wird die Nickel-Basis-Legierung der Schweißnaht 19 direkt auf die austenitische Wurzel aufgeschweißt, kann dies zu Rissbildung führen. Da das Schweißen von innen nach außen erfolgt, ist eine Erneuerung eines rissbehafteten Wurzelbereiches nur mit hohem Aufwand, meist nur dadurch möglich, dass die Verbindung zwischen den beiden Bauteilen 1, 2 wieder getrennt und nach aufwendigen Vorarbeiten von neuem mit dem Anschweißen einer Wurzel 25 begonnen wird. Es hat sich gezeigt, dass bei Vorhandensein einer Zwischenschicht 28 der genannten Art eine Rissbildung in der Wurzel 25 nicht auftritt. Durch die Zwischenschicht wird die Neigung zur Rissbildung aufgrund der günstigeren Aufmischungsverhältnisse mit den verschiedenen Werkstoffen unterdrückt.

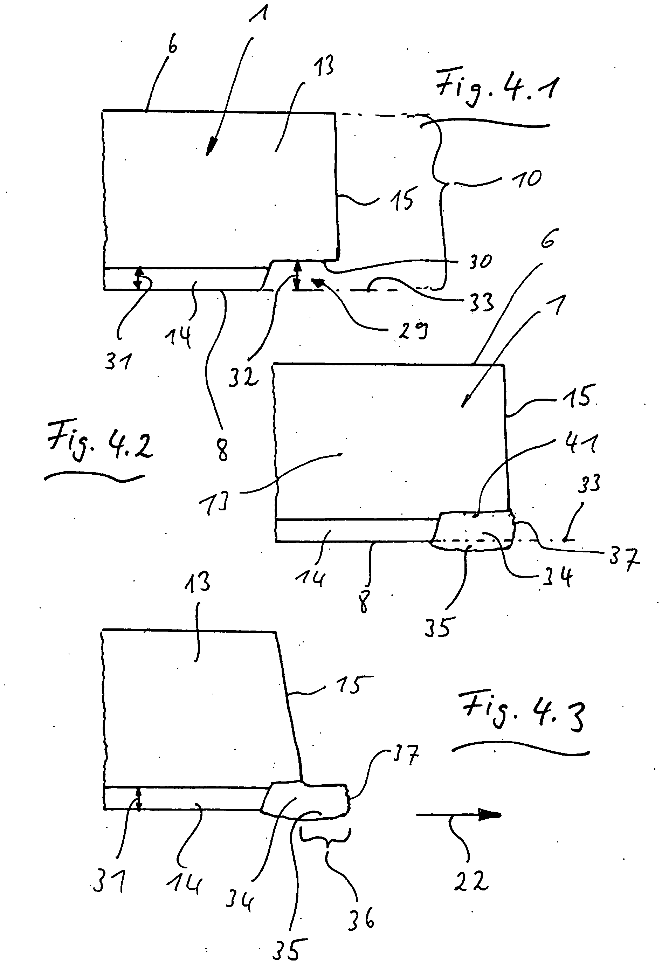

Eine zweite Verfahrensvariante ist in Fig. 4.1 bis 4.5 aufgezeigt. Sie unterscheidet sich von der oben beschriebenen durch eine andere Vorbereitung des Bauteils 1. Im Gegensatz zur oben beschriebenen Variante wird nicht die Stirnseite 15 des Grundkörpers 13, sondern die Plattierung 14 zuerst abgetragen, wobei jedoch ein Teil des Grundkörpers mit abgetragen wird. Die Plattierung 14 ist somit gegenüber der Stirnseite 15 etwas zurückversetzt, so dass an der Innenseite 8 des Bauteils 1 eine Ausnehmung 29 vorhanden ist. Der vom Grundkörper 13 gebildete Boden 30 der Ausnehmung 29 hat einen Abstand 32 zu der von der Innenseite 8 aufgespannten Ebene 33 (im Falle eines Rohres eine Zylindermantelfläche), der aufgrund des teilweisen Abtragens des Grundkörpers 13 bei der Entfernung der Plattierung 14 etwas größer ist als die Dicke 31 der Plattierung 14. In die Ausnehmung 29 wird als nächster Schritt (Fig. 4.2) eine die abgetragene Plattierung 14 ersetzende austenitische Schicht 34 derart geschweißt, dass diese mit einem Materialüberschuss 35 über die von der Innenseite 8 aufgespannte Ebene 33 hinaus steht. Anschließend wird die Stirnseite 15 des Grundkörpers 13 soweit abgetragen, dass sie von der austenitischen Schicht 34 mit einem Überstand 36 in Axialrichtung 22 überragt wird. Dabei wird auch ein Teil des an den Grundkörper 13 angrenzenden Bereichs 41 abgetragen.

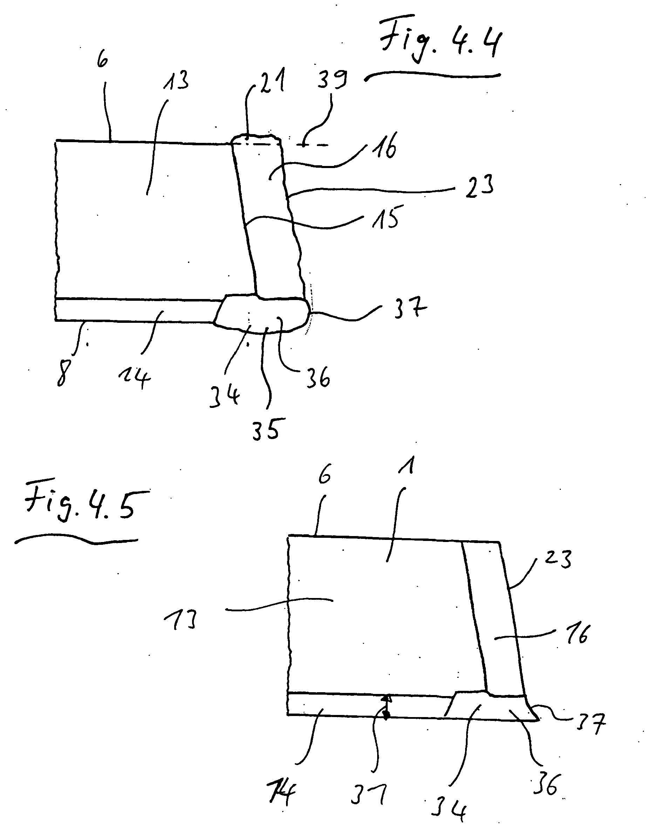

Als nächster Bearbeitungsschritt (Fig. 4.4) wird auf die Stirnseite 15 des Grundkörpers 13, ähnlich wie bei dem Verfahrensschritt gemäß Fig. 3.2 des weiter oben beschriebenen Verfahrens, eine Pufferschicht 16 aufgeschweißt, wobei am Überstand 36 begonnen wird. Die Pufferschicht 16 überdeckt die Stirnseite 15 vollständig und ist mit dem Überstand 36 der austenitischen Schicht 34 stoffschlüssig verbunden. Sie steht mit einem Materialüberschuss 21 über die Außenseite 6 bzw. über die von dieser aufgespannten Ebene 39 hinaus. Im nächsten Bearbeitungsschritt (Fig. 4.5) werden der Materialüberschuss 21 der Pufferschicht und der Materialüberschuss 35 der austenitischen Schicht 34 abgetragen. Die Stirnseite 23 der Pufferschicht 16 und die Stirnseite 37 der austenitischen Schicht 34 werden spanend bearbeitet und entsprechend der späteren Schweißfuge geformt. An das auf die geschilderte Art und Weise vorbereitete Bauteil 1 (Fig. 4.5) wird nun das Bauteil 2 auf die weiter oben beschriebene, in Fig. 3.4 bis Fig. 3.6 verdeutlichte Weise, angeschweißt.

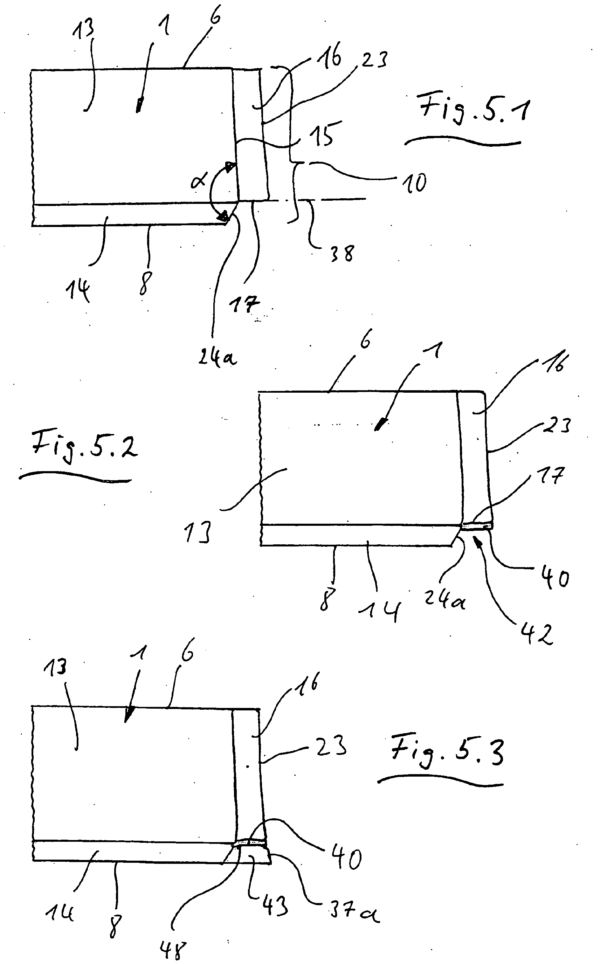

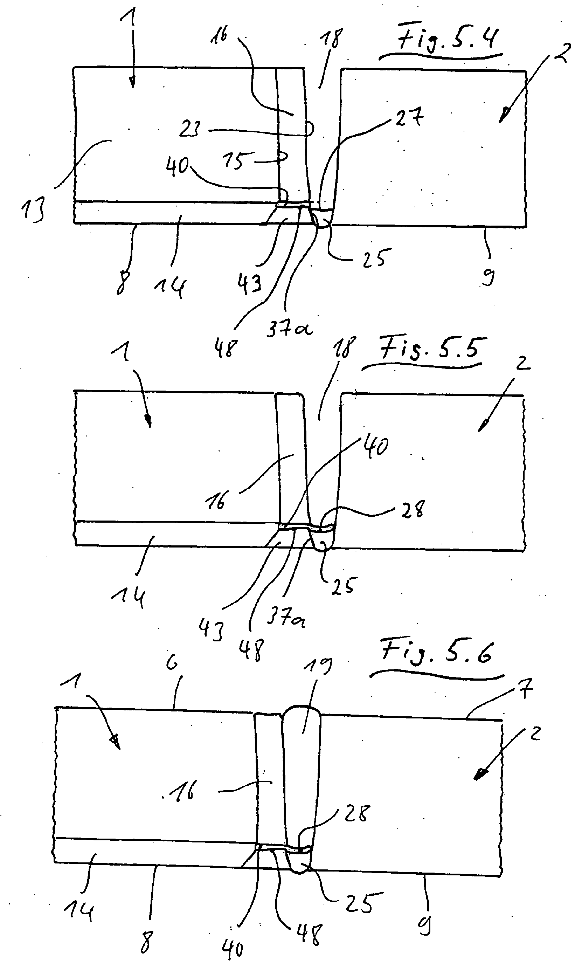

Eine weitere Verfahrensvariante (Fig. 5.1 bis 5.6) unterscheidet sich von den weiter oben beschriebenen Varianten hauptsächlich in der Vorbereitung des Bauteils 1. Hier wird als erster Schritt auf die Stirnseite 15 des Grundkörpers 13 eine Pufferschicht 16 aufgeschweißt und anschließend durch spanende Bearbeitung soweit abgetragen und geglättet, dass die Pufferschicht mit der Außenseite 6 des Grundkörpers und etwa mit der Trennlinie 38 zwischen Grundkörper 13 und Plattierung 14 fluchtet (Fig. 5.1). Vor dem Aufschweißen der Pufferschicht 16 wird die Stirnseite 24a der Plattierung 14 angefast, so dass sie mit der Stirnseite 15 des Grundkörpers 13 einen von der Pufferschicht 16 wegweisenden Winkel α < 180° einschließt. Als nächster Verfahrensschritt wird auf die Schmalseite 17 der Pufferschicht 16 eine Zwischenschicht 40 aufgeschweißt. Diese besteht aus einem Material, das sowohl mit der Nickel-Basis-Legierung der Pufferschicht 16 als auch mit einem austenitischem Material verschweißbar ist. Durch diese Maßnahme ist es nun möglich, den von der Schmalseite 17 und der Stirnseite 24a umgrenzten Bereich 42 unter Bildung einer austenitischen Schicht 43 zu füllen, indem das genannte Material auf die Zwischenschicht 40 aufgeschweißt und dabei auch mit der Stirnseite 24a stoffschlüssig verbunden wird. Nach einer spanenden Bearbeitung der Schicht 43 zur Glättung und Formung, ist das Bauteil 1 für eine Verbindung mit dem Bauteil 2 vorbereitet (Fig. 5.3). Als Material für die Zwischenschicht 40 eignet sich zunächst ein Material, dass auch für die weiter oben beschriebene Zwischenschicht 28 (zwischen Wurzel 25 und Schweißnaht 19) verwendet werden kann, nämlich eine Legierung mit wenigstens 90% Nickel, insbesondere eine solche, die 96% Nickel, 3% Titan und als Rest Begleitelement wie Eisen, Silizium und Mangan enthält. Eine solche Legierung ist unter der ASTM-Bezeichnung ERNI 1 bekannt. Das Anschweißen des Bauteils 2 an das entsprechend Fig. 5.3 vorbereitete Bauteil 1 geschieht im wesentlichen auf die weiter oben schon beschriebene Art und Weise. Als erster Schritt wird in die Schweißfuge 18 eine Wurzel 25 geschweißt, wobei sich diese auf der Seite des Bauteils 1 mit der austenitischen Schicht 43 stoffschlüssig verbindet. Es wird dabei soviel austenitisches Material in die Schweißfuge 18 eingebracht, dass möglichst die gesamte Stirnseite 37a der Schicht 43 von der Wurzel 25 überdeckt und so zur stoffschlüssigen Verbindung ausgenutzt wird. Die Wurzel reicht dabei maximal bis zur Trennlinie 48 zwischen der Trennschicht 40 und der austenitischen Schicht 43. Als nächster Schritt (Fig. 5.5) wird auf die Außenseite 27 der Wurzel 25 die bereits erwähnte Zwischenschicht 28 aufgeschweißt. Die Zwischenschicht 28 ist auf der Seite des Bauteils 1 mit der Zwischenschicht 40 verbunden und hat etwa die gleiche Dicke wie diese. Als letzter Verfahrensschritt (Fig. 5.6) wird schließlich die Schweißnaht 18 mit Inconel 82 erzeugt.

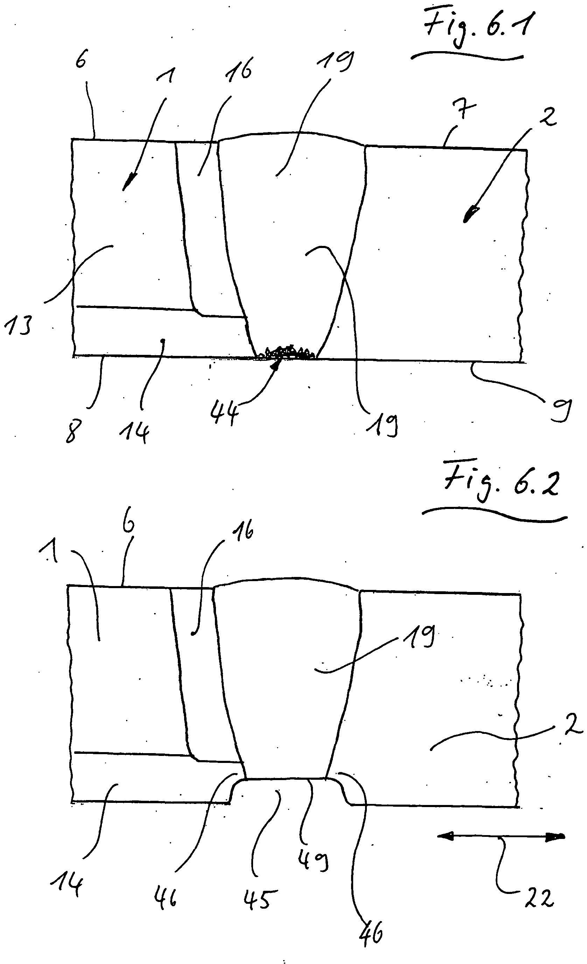

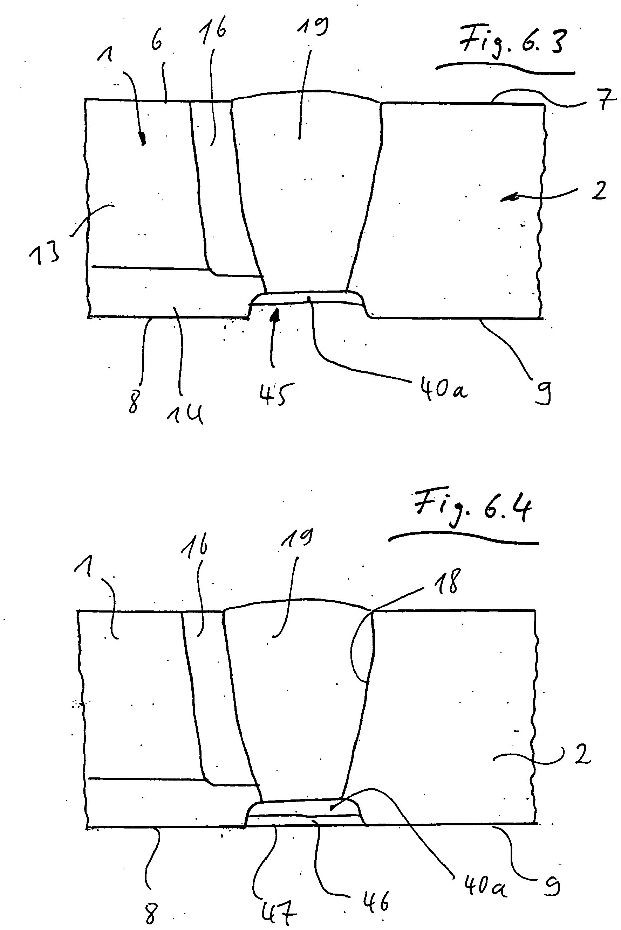

Wie bereits erwähnt, neigt eine herkömmliche Schweißverbindung mit 1 182 zwischen zwei Bauteilen 1, 2 besonders nach längerem Einsatz zur Korrosion bei Kontakt mit entsprechenden Medien. Bei fortgeschrittener Korrosion war bisher eine solche Schweißverbindung völlig neu herzustellen. Mit Hilfe des im folgenden beschriebenen Reparaturverfahrens lässt sich die Schweißverbindung mit vergleichsweise geringem Aufwand sanieren. Im Falle von Rohrleitungssystemen, etwa dem Primärkreislauf eines Kernkraftwerkes, muss natürlich, um nicht doch die gesamte Schweißverbindung auftrennen zu müssen, in der Nähe der Schweißverbindung ein Manipulatorzugang vorhanden sein. Durch diesen Zugang können dann Manipulatorwerkzeuge und Schweißroboter in das Rohrinnere eingebracht werden. Eine durch Korrosion verursachte Schadstelle 44 (Fig. 6.1) an einer Schweißnaht 19 aus einer Nickel-Basis-Legierung kann in Umfangsrichtung gesehen lokal begrenzt sein oder sich auch über den gesamten Innenumfang der Schweißnaht 19 erstrecken. Zunächst wird ein die Schadstelle 44 enthaltender Bereich großzügig abgetragen, wodurch eine Ausnehmung 45 gebildet wird (Fig. 6.2). Die Ausnehmung 45 erstreckt sich in Axialrichtung 22 in sich seitlich an die Schweißnaht 19 anschließende Bereiche 46 der Plattierung 14 bzw. des Bauteils 2 hinein. Auf den Grund 49 der Ausnehmung 45 wird nun eine Zwischenschicht 40a aufgeschweißt, die aus den gleichen Materialien wie die weiter oben genannte Zwischenschicht 40 besteht (Fig. 6.3). Die Zwischenschicht 40a überdeckt den Grund 49 der Ausnehmung 45 vollständig. Auf die Zwischenschicht 40a wird schließlich eine Abschlussschicht 46 aus austenitischem Material, beispielsweise AISI 347 flächendeckend aufgeschweißt. Das nach dem Schweißvorgang über die Innenseiten 8, 9 hinaus stehende Material (nicht dargestellt) wird nachträglich so abgetragen, dass die Innenseite 47 der Abschlussschicht 46 mit der Innenseite 8, 9 des Bauteils 1 bzw. 2 fluchtet.

### Bezugszeichenliste

- 1: Bauteil
- 2: Bauteil
- 3: Anschlussstutzen
- 4: Reaktordruckbehälter
- 5: Rohr
- 6: Außenseite (von 1)
- 7: Außenseite (von 2)
- 8: Innenseite (von 1)
- 9: Innenseite (von 2)
- 10: Stirnseite (von 1)
- 12: Stirnseite (von 2)
- 13: Grundkörper
- 14: Plattierung
- 15: Stirnseite (von 13)
- 16: Pufferschicht
- 17: Schmalseite (von 16)
- 18: Schweißfuge
- 19: Schweißnaht
- 20: Überstand
- 21: Materialüberschuss
- 22: Axialrichtung
- 23: Stirnseite (von 16)
- 24: Stirnseite (von 14)
- 25: Wurzel
- 26: Trennlinie
- 27: Außenseite (von 25)
- 28: Zwischenschicht
- 29: Ausnehmung
- 30: Boden
- 31: Dicke (von 14)
- 32: Abstand
- 33: Ebene
- 34: austenitische schicht
- 35: Materialüberschuss
- 36: Überstand
- 37: Stirnseite (von 34)
- 38: Trennlinie (zwischen 13 und 14)
- 39: Ebene
- 40: Zwischenschicht
- 41: Bereich (von 34)
- 42: Bereich
- 43: austenitische Schicht
- 44: Schadstelle
- 45: Ausnehmung
- 46: Abschlussschicht
- 47: Innenseite
- 48: Trennlinie (zwischen 40 und 43) und 43)
- 49: Grund

## Patentansprüche

1. Verfahren zur Herstellung einer Schweißverbindung zwischen einem ersten und einem zweiten, jeweils eine Innenseite (8, 9), eine Außenseite (6, 7) und eine diese verbindende Stirnseite (10, 12) aufweisenden Bauteil (1, 2), wobei das erste Bauteils(1) aus einem ferritischen Grundkörper, (13) mit einer innenseitigen Plattierung (14) aus einem austenitischen Material gebildet ist , und wobei das zweite Bauteil (2) aus einem austentischen Material gebildelt ist, mit den folgenden Schritten:
a) die beiden Bauteile (1, 2) werden so zueinander angeordnet, dass ihre Stirnseiten (10, 12) eine Schweißfuge (18) zwischen sich einschließen,
**dadurch gekennzeichnet, dass** die Stirnzeite (15) des erstein Bauteils (1) mit einer Pufferschicht (16) aus einer Ni-Basis-Legierung versehen ist
b) in der Schweißfuge (18) wird eine die Plattierung (14) mit der Stirnseite (12) des zweiten Bauteils (2) verbindende Wurzel (25) aus einem austenitischen Material geschweißt,
c) aüf die Wurzel (25) wird eine Zwischenschicht (28) aus einer Nickellegierung mit mindestens 90 % Nickel aufgeschweißt, welche mit der Stirnseite (24) der Plattierung (14) und der Stirnseite (12) des zweiten Bauteils (2) verbunden ist,
d) anschließend wird in der noch verbliebenen Schweißfuge (18) mit einem Schweißzusatzwerkstoff auf Nickelbasis eine Schweißnaht (19) erzeugt.

2. Verfahren nach Anspruch 1,
**dadurch gekennzeichnet,**
**dass** die Pufferschicht (16) an dem ersten Bauteil (1) wie folgt hergestellt wird:
a) der Grundkörper 13 des ersten Bauteils (1) wird von seiner Stirnseite (15) her so weit abgetragen, dass die Plattierung (14) die Stirnseite (15) mit einem Überstand (20) überragt,
b) auf die Stirnseite (15) des Grundkörpers (13) wird eine diese vollständig überdeckende und mit dem Überstand (20) verbundene Pufferschicht (16) aus einem Schweißzusatzwerkstoff auf Nickelbasis aufgeschweißt,
c) das erste Bauteil (1) wird im Bereich der Pufferschicht (16) wärmebehandelt, um während des Aufschweißens der Pufferschicht (16) entstandene Materialspannungen abzubauen,
d) die Oberfläche der Pufferschicht (16) wird durch spanende Bearbeitung geglättet.

3. Verfahren nach Anspruch 1,
**dadurch gekennzeichnet,**
**dass** die Pufferschicht (16) wie folgt auf das erste Bauteil (1) aufgebracht wird:
a) ein an die Stirnseite (15) des Grundkörpers angrenzender Bereich der Plattierung (14) wird abgetragen,
b) in die durch die Abtragung entstandene Ausnehmung (29) wird eine austenitische Schicht (34) aus austenitischem Material derart geschweißt, dass die Ersatzschicht (34) die Innenseite (8) des Bauteils (1) mit einem Materialüberschuss (35) überragt,
c) die Stirnseite (15) des Grundkörpers (13) wird so weit abgetragen, dass die austenitische Schicht (34) die Stirnseite mit einem Überstand (36) überragt,
d) auf die Stirnseite (15) des Grundkörpers (13) wird eine diese vollständig überdeckende und mit dem Überstand (36) der Ersatzschicht (34) verbundene Pufferschicht (16) aus einem Schweißzusatzwerkstoff auf Nickelbasis aufgeschweißt,
e) das erste Bauteil (1) wird im Bereich der Pufferschicht (16) wärmebehandelt, um während des Aufschweißens der Pufferschicht (16) entstandene Materialspannungen abzubauen,
f) durch spanende Bearbeitung wird die Pufferschicht stirnseitig geglättet und die austenitische Schicht 34 auf eine der Plattierung entsprechende Dicke abgetragen.

4. Verfahren nach Anspruch 1,
**dadurch gekennzeichnet,**
**dass** die Pufferschicht (16) an dem ersten Bauteil (1) wie folgt hergestellt wird:
a) auf die Stirnseite (15) des Grundkörpers (13) wird eine diese vollständig überdeckende Pufferschicht (16) aus einem Schweißzusatzwerkstoff auf Nickelbasis aufgeschweißt,
b) durch spanende Bearbeitung wird die Stirnseite (23) der Pufferschicht (16) und deren zur Innenseite (8) des Bauteils (1) weisende Schmalseite (17) geglättet,
c) auf die Schmalseite (17) wird eine Zwischenschicht (40) flächendeckend aufgeschweißt, die aus einem sowohl mit der Ni-Basis-Legierung der Pufferschicht (16) als auch mit einem austenitischem Material verschweißbaren Material besteht,
d) Die Zwischenschicht (40) wird auf diese eine Schicht 43 aus austenitischem Material so aufgeschweißt, dass sie über über die Stirnseite (15) des Grundkörpers(13) und über die Innenseite (8) des Bauteils (1) hinaussteht,
e) durch spanende Bearbeitung wird die austenitische Schicht (43) geglättet und dabei ihre der Zwischenschicht (40) abgewandte Oberfläche so weit abgetragen, dass sie mit der Innenseite (8) fluchtet.

5. Verfahren nach Anspruch 4,
**dadurch gekennzeichnet,**
**dass** für die zweite Zwischenschicht ein Material verwendet wird, das 10 bis 40 % Ni, 10 bis 30 % Cr, 1 bis 10 % Mn, 0,1 bis 0,3 % Si und 0,01 bis 0,4 % C enthält.

6. Verfahren nach Anspruch 5,
**gekennzeichnet durch**
die Verwendung eines Materials, das zusätzlich 0,1 bis 0,3 % N und 2 bis 6 % Mo enthält.
enthält.

7. Verfahren nach Anspruch 5,
**gekennzeichnet durch**
die Verwendung eines Materials, das zusätzlich 1 bis 3 % Nb enthält.

8. Verfahren nach einem der vorhergehenden Ansprüche,
**dadurch gekennzeichnet,**
**dass** für die erste Zwischenschicht ein Material verwendet wird, das 95 bis 98 % Ni enthält.

9. Verfahren zur Reparatur einer Schweißverbindung zwischen einem ersten und einem zweiten, jeweils eine Innenseite (8, 9), eine Außenseite (6, 7) und eine diese verbindende Stirnseite (10, 12) aufweisenden Bauteil (1, 2), wobei das erste Bauteil (1) aus einem ferritischen Grundkörper (13) mit einer innenseitigen Plattierung (14) aus einem austenitischen Material gebildet ist , wobei das zweite Bauteil (2) aus einem austenitischen Material gebildet ist, und wobei die Stirnseiten (10, 12) der beiden Bauteile (1, 2) mit Hilfe einer Schweißnaht (18) aus einem Schweißzusatzstoff auf Nickelbasis miteinander verbunden sind, mit folgenden Schritten:
a) der zwischen den beiden Bauteilen (1, 2) vorhandene Schweißbereich wird auf der Seite der Plattierung (14) unter Bildung einer Ausnehmung (45) abgetragen,
**dadurch gekennzeichnet, dass** die Stirnzeite (15) des erstein Bauteils (1) eine Pufferschicht (16) aus einer Ni-Basis-Legierung trägt
b) in die Ausnehmung (45) wird eine diese zum Teil auffüllende und deren Grund (49) vollständig überdeckende Zwischenschicht (40a) aus einer Legierung geschweißt, die sowohl mit der Ni-Basis-Legierung der Pufferschicht (16) als auch mit einem austenitischem Material verschweißbar ist,
c) auf die Zwischenschicht (40a) wird eine Abschlussschicht (46) aus austenitischem Material flächendeckend aufgeschweißt,
d) die Abschlussschicht (46) wird durch spanende Bearbeitung geglättet.

10. Verfahren nach Anspruch 9,
**dadurch gekennzeichnet,**
**dass** für die Zwischenschicht (40a) ein Material verwendet wird, das 94 bis 97 % Ni enthält.

11. Verfahren nach Anspruch 9,
**dadurch gekennzeichnet,**
**dass** für die zweite Zwischenschicht ein Material verwendet wird, das 10 bis 40 % Ni, 10 bis 30 % Cr, 1 bis 10 % Mn, 0,1 bis 0,3 % Si und 0,01 bis 0,4 % C enthält.

12. Verfahren nach Anspruch 11,
**gekennzeichnet durch**
die Verwendung eines Materials, das zusätzlich 0,1 bis 0,3 % N und 2 bis 6 % Mo enthält.
enthält.

13. Verfahren nach Anspruch 11,
**gekennzeichnet durch**
die Verwendung eines Materials, das zusätzlich 1 bis 3 % Nb enthält.

## Claims

1. Method for producing a welded connection between a first and a second component (1, 2) having in each case an inside (8, 9), an outside (6, 7) and an end face (10, 12) connecting these, the first component (1) being formed from a ferritic basic body (13) with an inside plating (14) consisting of an austenitic material, and the second component (2) being formed from an austenitic material, with the following steps:
a) the two components (1, 2) are arranged with respect to one another such that their end faces (10, 12) enclose between them a weld groove (18), **characterized in that** the end face (15) of the first component (1) is provided with a buffer layer (16) consisting of a nickel-based alloy,
b) a root (25) connecting the plating (14) to the end face (12) of the second component (2) and consisting of an austenitic material is welded in the weld groove (18),
c) an intermediate layer (28) consisting of a nickel alloy with at least 90% nickel is welded onto the root (25) and is connected to the end face (24) of the plating (14) and to the end face (12) of the second component (2),
d) subsequently, a weld seam (19) is generated by means of a nickel-based welding additive in the weld groove (18) which still remains.

2. Method according to Claim 1, **characterized in that** the buffer layer (16) is produced on the first component (1) as follows:
a) the basic body (13) of the first component (1) is stripped off from its end face (15) to an extent such that the plating (14) projects beyond the end face (15) with a projecting length (20),
b) a buffer layer (16) which completely covers the end face (15) of the basic body (13) and is connected to the projecting length (20) and which consists of a nickel-based welding additive is welded onto said end face,
c) the first component (1) is heat-treated in the region of the buffer layer (16), in order to break down material stresses which have occurred during the welding on of the buffer layer (16),
d) the surface of the buffer layer (16) is smoothed by cutting machining.

3. Method according to Claim 1, **characterized in that** the buffer layer (16) is applied to the first component (1) as follows:
a) a region of the plating (14) which is contiguous to the end face (15) of the basic body is stripped off,
b) an austenitic layer (34) consisting of austenitic material is welded into the recess (29) which has occurred due to the stripping off, in such a way that the replacement layer (34) projects with a material excess (35) beyond the inside (8) of the component (1),
c) the end face (15) of the basic body (13) is stripped off to an extent such that the austenitic layer (34) projects beyond the end face with a projecting length (36),
d) a buffer layer (16) which completely covers the end face (15) of the basic body (13) and is connected to the projecting length (36) of the replacement layer (34) and which consists of a nickel-based welding additive is welded onto said end face,
e) the first component (1) is heat-treated in the region of the buffer layer (16), in order to break down material stresses which have occurred during the welding on of the buffer layer (16),
f) the buffer layer is smoothed on the end face by cutting machining, and the austenitic layer 34 is stripped off to a thickness corresponding to the plating.

4. Method according to Claim 1, **characterized in that** the buffer layer (16) is produced on the first component (1) as follows:
a) a buffer layer (16) which completely covers the end face (15) of the basic body (13) and consists of a nickel-based welding additive is welded onto said end face,
b) the end face (23) of the buffer layer (16) and its narrow side (17) facing the inside (8) of the component (1) are smoothed by cutting machining,
c) an intermediate layer (40) is welded onto the narrow side (17) so as to cover the entire area and consists of a material weldable both to the nickel-based alloy of the buffer layer (16) and to an austenitic material,
d) the intermediate layer (40) is welded onto this layer 43 consisting of austenitic material such that it protrudes beyond the end face (15) of the basic body (13) and beyond the inside (8) of the component (1),
e) the austenitic layer (43) is smoothed by cutting machining and, in this case, its surface facing away from the intermediate layer (40) is stripped off to an extent such that it is in alignment with the inside (8).

5. Method according to Claim 4, **characterized in that**, for the second intermediate layer, a material is used which contains 10 to 40% Ni, 10 to 30% Cr, 1 to 10% Mn, 0.1 to 0.3% Si and 0.01 to 0.4% C.

6. Method according to Claim 5, **characterized by** the use of a material which additionally contains 0.1 to 0.3% N and 2 to 6% Mo.

7. Method according to Claim 5, **characterized by** the use of a material which additionally contains 1 to 3% Nb.

8. Method according to one of the preceding claims, **characterized in that**, for the first intermediate layer, a material is used which contains 95 to 98% Ni.

9. Method for repairing a welded connection between a first and a second component (1, 2) having in each case an inside (8, 9), an outside (6, 7) and an end face (10, 12) connecting these, the first component (1) being formed from a ferritic basic body (13) with an inside plating (14) consisting of an austenitic material, the second component (2) being formed from an austenitic material, and the end faces (10, 12) of the two components (1, 2) being connected to one another with the aid of a weld seam (18) consisting of a nickel-based welding additive, with the following steps:
a) the weld region present between the two components (1, 2) is stripped off on the side of the plating (14) so as to form a recess (45),
**characterized in that** the end face (15) of the first component (1) carries a buffer layer (16) consisting of a nickel-based alloy,
b) an intermediate layer (40a) which partially fills the recess (45) and completely covers its bottom (49) and which consists of an alloy weldable both to the nickel-based alloy of the buffer layer (16) and to an austenitic material is welded into said recess,
c) a closing-off layer (46) consisting of austenitic material is welded onto the intermediate layer (40a) so as to cover the entire area,
d) the closing-off layer (46) is smoothed by cutting machining.

10. Method according to Claim 9, **characterized in that**, for the intermediate layer (40a), a material is used which contains 94 to 97% Ni.

11. Method according to Claim 9, **characterized in that**, for the second intermediate layer, a material is used which contains 10 to 40% Ni, 10 to 30% Cr, 1 to 10% Mn, 0.1 to 0.3% Si and 0.01 to 0.4% C.

12. Method according to Claim 11, **characterized by** the use of a material which additionally contains 0.1 to 0.3% N and 2 to 6% Mo.

13. Method according to Claim 11, **characterized by** the use of a material which additionally contains 1 to 3% Nb.

## Revendications

1. Procédé de création d'un assemblage par soudure entre un premier et un deuxième composants (1, 2) comportant chacun une face interne (8, 9), une face externe (6, 7) et une face frontale (10, 12) reliant ces dernières, le premier composant (1) étant formé d'un corps de base (13) ferritique avec un revêtement interne (14) en une matière austénitique et le deuxième composant (2) étant formé d'une matière austénitique, avec les étapes suivantes :
a) on place les deux composants (1, 2) l'un par rapport à l'autre de sorte que leurs faces frontales (10, 12) comprennent entre elles un joint de soudage (18), **caractérisé en ce que** la face frontale (15) du premier composant (1) est munie d'une couche tampon (16) en un alliage sur base Ni,
b) dans le joint de soudage (18) on soude une racine (25) en une matière austénitique reliant le revêtement (14) avec la face frontale (12) du deuxième composant (2),
c) sur la racine (25) on soude une couche intermédiaire (28) en un alliage de nickel avec au moins 90 % de nickel, qui est reliée avec la face frontale (24) du revêtement (14) et la face frontale (12) du deuxième composant (2),
d) on créé ensuite un cordon de soudure (19) dans le joint de soudage (18) restant encore, avec un métal d'apport sur base de nickel.

2. Procédé selon la revendication 1,
**caractérisé en ce qu'**
on fabrique la couche tampon (16) sur le premier composant (1) de la manière suivants :
a) on enlève du corps de base (13) du premier composant (1) à partir de sa face frontale (15) jusqu'à ce que le revêtement (14) saillisse par dessus la face frontale (15) avec un débordement (20),
b) on soude sur la face frontale (15) du corps de base (13) une couche tampon (16) en un métal d'apport sur base de nickel recouvrant complètement cette dernière et reliée au débordement (20),
c) on soumet le premier composant (1) dans la zone de la couche tampon (16) à un traitement thermique pour résorber les tensions nées dans la matière pendant le soudage de la couche tampon (16),
d) on lisse la surface de la couche tampon (16) par usinage par enlèvement de copeaux.

3. Procédé selon la revendication 1,
**caractérisé en ce qu'**
on applique la couche tampon (16) sur le premier composant (1) de la manière suivants :
a) on enlève une zone du revêtement (14) adjacente à la face frontale (15) du corps de base,
b) dans l'évidement (29) résultant de l'enlèvement, on soude une couche austénitique (34) en une matière austénitique, de telle sorte que la couche de remplacement (34) saillisse par-dessus la face intérieure (8) de l'composant (1) avec un excédent de matière (35),
c) on enlève de la face frontale (15) du corps de base (13) jusqu'à ce que la couche austénitique (34) saillisse par-dessus la face frontale avec un débordement (36),
d) on soude sur la face frontale (15) du corps de base (13) une couche tampon (16) en un métal d'apport sur base de nickel recouvrant complètement cette dernière et reliée au débordement (36) de la couche de remplacement (34),
e) on soumet le premier composant (1) dans la zone de la couche tampon (16) à un traitement thermique pour résorber les tensions nées dans la matière pendant le soudage de la couche tampon (16),
f) par usinage par enlèvement de copeaux, on lisse la couche tampon côté frontal et on enlève de la couche austénitique (34) sur une épaisseur correspondant au revêtement.

4. Procédé selon la revendication 1,
**caractérisé en ce qu'**
on fabrique la couche tampon (16) sur le premier composant (1) de la manière suivante :
a) on soude sur la face frontale (15) du corps de base (13) une couche tampon (16) en un métal d'apport sur base de nickel recouvrant complètement cette dernière,
b) par usinage par enlèvement de copeaux, on lisse la face frontale (23) de la couche tampon (16) et son côté étroit (17) dirigé vers la face intérieure (8) de l'composant (1),
c) sur le côté étroit (17) on soude une couche intermédiaire (40) à pleine surface qui consiste dans une matière soudable aussi bien avec l'alliage sur base de Ni de la couche tampon (16) qu'avec une matière austénitique,
d) on soude la couche intermédiaire (40) sur cette une couche (43) en matière austénitique, de telle sorte qu'elle dépasse de la face frontale (15) du corps de base (13) et de la face intérieure (8) de l'composant (1)
e) par usinage par enlèvement de copeaux, on lisse la couche austénitique (43) et on enlève à cet effet de sa surface opposée à la couche intermédiaire (40) jusqu"à ce qu'elle soit alignée sur la face intérieure (8).

5. Procédé selon la revendication 4,
**caractérisé en ce que**
pour la deuxième couche intermédiaire, on utilise une matière qui contient de 10 à 40 % de Ni, de 10 à 30 % de Cr, de 1 à 10 % de Mn, de 0,1 1 à 0,3 % de Si et de 0,01 à 0,4 % de C.

6. Procédé selon la revendication 5,
**caractérisé par**
l'utilisation d'une matière qui contient en supplément de 0,1 à 0,3 % de N et de 2 à 6 % de Mo.

7. Procédé selon la revendication 5,
**caractérisé par**
l'utilisation d'une matière qui contient en supplément de 1 à 3 % de Nb.

8. Procédé selon l'une quelconque des revendications précédentes,
**caractérisé en ce que**
pour la première couche intermédiaire, on utilise une matière qui contient de 95 à 98 % de Ni.

9. Procédé de réparation d'un assemblage par soudure entre un premier et un deuxième composants (1, 2) comportant chacun une face interne (8, 9), une face externe (6, 7) et une face frontale (10, 12) reliant ces dernières, le premier composant (1) étant formé d'un corps de base (13) ferritique avec un revêtement interne (14) en une matière austénitique et le deuxième composant (2) étant formé d'une matière austénitique et les faces frontales (10, 12) des deux composants (1, 2) étant reliées ensemble à l'aide d'un cordon de soudure (18), en un métal d'apport sur base de nickel, avec les étapes suivantes :
a) sur le côté du revêtement (14), on enlève de la zone de soudage présente entre les deux composants (1, 2) en formant un évidement (45), **caractérisé en ce que** la face frontale (15) du premier composant (1) porte une couche tampon (16) en un alliage sur base Ni,
b) dans l'évidement (45), on soude une couche intermédiaire (40a) remplissant cette dernière en partie et recouvrant complètement son fond (49) en un alliage qui est soudable aussi bien avec l'alliage sur base de Ni de la couche tampon (16) qu'avec une matière austénitique,
c) sur la couche intermédiaire (40a), on soude à pleine surface une couche de terminaison (46) en une matière austénitique,
d) on lisse la couche de terminaison (46) par usinage par enlèvement de copeaux.

10. Procédé selon la revendication 9,
**caractérisé en ce que**
pour la couche intermédiaire (40a), on utilise une matière qui contient de 94 à 97 % de Ni.

11. Procédé selon la revendication 9,
**caractérisé en ce que**
pour la deuxième couche intermédiaire, on utilise une matière qui contient de 10 à 40 % de Ni, de 10 à 30 % de Cr, de 1 à 10 % de Mn, de 0,1 à 0,3 % de Si et de 0,01 à 0,4 % de C.

12. Procédé selon la revendication 11,
**caractérisé par**
l'utilisation d'une matière qui contient en supplément de 0,1 à 0,3 % de N et de 2 à 6 % de Mo.

13. Procédé selon la revendication 11,
**caractérisé par**
l'utilisation d'une matière qui contient en supplément de 1 à 3 % de Nb.
